# EUROPEAN PATENT SPECIFICATION

(11) **EP 2 623 837 B1**
(45) Date of publication and mention of the grant of the patent: **09.08.2017**
(21) Application number: 10857879.0
(22) Date of filing: 01.10.2010
(51) Int. Cl.: F16L 47/06, F16L 25/00

(54) **SYNTHETIC RESIN TUBE WITH JOINT AND CONNECTION STRUCTURE THEREOF**
KUNSTHARZRÖHRE MIT VERBINDUNG UND VERBINUNDGSSTRUKTUR DAFÜR
TUBE EN RÉSINE SYNTHÉTIQUE AVEC JONCTION ET STRUCTURE DE CONNEXION

(43) Date of publication of application: 07.08.2013
(73) Proprietor: Kanaflex Corporation, Osaka-shi, Osaka 530-6017 (JP)
(72) Inventor: KANAO, Shigeki, Nishinomiya-shi Hyogo 662-0002 (JP)
(74) Representative: Müller-Boré & Partner Patentanwälte PartG mbB
(86) International application number: PCT/JP2010/067256
(87) International publication number: WO 2012/042666

(56) References cited:
- JP-A- 2001 221 390
- JP-A- 2002 139 178
- JP-A- 2004 138 098
- JP-A- 2010 139 062
- JP-Y2- 2 602 515
- US-A- 5 415 440
- US-A1- 2010 126 616

## Description

### TECHNICAL FIELD

The present invention relates to a synthetic resin pipe with a joint applicable to a drainage pipe buried under the road, a large drainage pipe for a sewer, or the like, and also relates to a connection structure thereof.

### BACKGROUND ART

Conventionally, there have been generally used concrete hume pipes as drainage pipes buried under roads and drainage pipes for sewers.

In recent years, there has been a tendency to use corrugated synthetic resin pipes that have strength at the same level or higher than that of a hume pipe and are useful in terms of durability, weight saving, easier application, and the like.

An example of such a corrugated synthetic resin pipe of this type is specifically a corrugated synthetic resin pipe including a cylindrical main body and a reinforcing convex portion that is helically wound around the outer wall of the main body.

In a case where such corrugated synthetic resin pipes are connected with each other, a waterproof material is fitted into a helical groove at the connected portion and a packing sheet is wound thereon. Furthermore, halved joints in a pair (each having a C-letter shape in cross section) each provided with a flange are used to assemble a cylindrical shape so as to cover connected-side end portions of the synthetic resin pipes, and the flanges of the respective halved joints are fastened and fixed to each other by means of bolts and nuts.

However, the above connection method requires that a caulking compound, a waterproof block serving as the waterproof material, the packing sheet, the halved joints in the pair, and the like are assembled on site in accordance with the connection processes. Thus, it requires quite time and tasks. Furthermore, the large number of parts complicates the management tasks.

Moreover, the waterproof material is quite easily peeled off depending on the connected position or the like, with a result that waterproof properties are imperfect even with such rigid adhesion, which becomes problematic leaking or the like.

In view of the above, there has been proposed a synthetic resin pipe that facilitates the connection operation and reduces the work time. As such synthetic resin pipes, corrugated synthetic resin pipes each have a connected-side end portion provided with a connection flange by welding, and a packing is provided between contact surfaces of the connection flanges, which are fastened by means of bolts and nuts (see Patent Document 1, for example).

Such a synthetic resin pipe significantly improves the workability in comparison to the conventional connection method with use of the halved joints, thereby achieving more reliable connection.

However, these connection flanges require the connection operation by means of bolts and nuts, thereby deteriorating the work efficiency in an environment where a working space cannot be secured.

Furthermore, leaking may occur unless the connection flange is securely welded to the synthetic resin pipe. Deformation or the like at the surface of the connection flange will also cause leaking. Accordingly, the connection flange needs to be attached carefully.

The connection flanges need to be excellent in quality in order to secure sufficient strength and prevent deformation thereof. Such rigid connection flanges as well as bolts and nuts used for connecting these flanges with each other inevitably increase the weight at the connected portion, which results in limited reduction in cost.

Moreover, most of large-scale synthetic resin pipes used for drainage pipes each have an inner diameter of at least 1000 mm and a length of approximately 5 m. If such a large and long synthetic resin pipe is loaded to and unloaded from the back of a truck or the like and is dropped, an end portion of the pipe may be broken, which is a problematic disadvantage.

US 2010/0126616 A1 discloses a corrugated synthetic resin pipe with a joint according to the preamble of claim 1.

### PRIOR ART DOCUMENT

### PATENT DOCUMENT

Patent Document 1: JP-A-2002-139178

### SUMMARY OF THE INVENTION

### PROBLEMS TO BE SOLVED BY THE INVENTION

In view of the above circumstances, the present invention has been achieved to provide a synthetic resin pipe with a joint, which has a simple structure with a small number of parts, achieves sufficient waterproof property and pressure resistance as well as excellent sealing properties with no need for any strong material or highly accurate production, realizes reduction in weight and reduction in cost, and is easily handled with facilitated connection operation on site. The present invention has been achieved also to provide a connection structure thereof.

### SOLUTIONS TO THE PROBLEMS

The present invention provides a synthetic resin pipe with a joint according to claim 1. The joint is located at a connected-side end portion of the corrugated synthetic resin pipe, for connecting the pipe with another corrugated synthetic resin pipe, wherein
the joint is provided with a socket portion that is cylindrically extended from the connected-side end portion of the corrugated synthetic resin pipe, and
the socket portion comprised of a composite body including a foamed compact that is molded into a cylindrical shape and an FRP layer that is laminated at least on an outer circumferential surface of the foamed compact.

The present invention also provides a connection structure between the synthetic resin pipe with the joint having the socket portion configured as described above, and a synthetic resin pipe with a joint having an insert end portion to be inserted into the socket portion, wherein
the synthetic resin pipe provided with the insert end portion is corrugated and has a connected-side end portion that is provided with an insert end portion helical-groove filling layer filling and smoothing a helical-groove of the corrugation.

The corrugated synthetic resin pipe according to the present invention may have a wave of a helical type in which the wave is helically and continuously provided in the pipe axis direction, or waves of a ring type in which the ring waves are continuously provided in the pipe axis direction at a constant distance.

### EFFECTS OF THE INVENTION

In the synthetic resin pipe provided with the joint according to the present invention, the socket portion is comprised of a composite body including the foamed compact and the FRP layer. It is therefore possible to achieve both reduction in weight and increase in strength at the joint. Furthermore, production is achieved at a low cost. Moreover, the joint of the synthetic resin pipe can be protected from damage during transportation or the like.

In the connection structure between the synthetic resin pipes each provided with the joint according to the present invention, the connection operation can be completed only by inserting, into the socket portion of the one synthetic resin pipe, the insert end portion of the other synthetic resin pipe, thereby achieving improvement in efficiency of the connection operation.

Furthermore, the cylindrical socket portion wraps the insert end portion in the structure. It is therefore possible to achieve sufficient waterproof property and pressure resistance as well as excellent sealing properties with no need for any strong material or high accuracy.

### BRIEF DESCRIPTION OF THE DRAWINGS

Fig. 1 is a general view showing a connection state between synthetic resin pipes according to the present invention.
Fig. 2(a) is a front view of a socket portion of a synthetic resin pipe according to a first embodiment of the present invention, and Fig. 2(b) is a front view of an insert end portion of another synthetic resin pipe.
Fig. 3(a) is an enlarged view of the socket portion shown in Fig. 2(a), and Fig. 3(b) is an enlarged view of the insert end portion shown in Fig. 2(b).
Fig. 4 is a front view showing a connection structure between the synthetic resin pipes according to the first embodiment of the present invention.
Fig. 5(a) is a front view of a socket portion of a synthetic resin pipe according to a second embodiment of the present invention, and Fig. 5(b) is a front view of an insert end portion of another synthetic resin pipe.
Fig. 6(a) is an enlarged view of the socket portion shown in Fig. 5(a), and Fig. 6(b) is an enlarged view of the insert end portion shown in Fig. 5(b).
Fig. 7(a) is a front view of a socket portion of a synthetic resin pipe according to a third embodiment of the present invention, and Fig. 7(b) is a front view of an insert end portion of another synthetic resin pipe.
Fig. 8(a) is an enlarged view of the socket portion shown in Fig. 7(a), and Fig. 8(b) is an enlarged view of the insert end portion shown in Fig. 7(b).
Fig. 9(a) is a front view of a socket cover according to a modification example of the present invention, and Fig. 9(b) is a front view of an insert end portion.
Fig. 10(a) is an enlarged view of a socket portion shown in Fig. 9(a), and Fig. 10(b) is an enlarged view of the insert end portion shown in Fig. 9(b).

### MODES FOR CARRYING OUT THE INVENTION

Described below in detail with reference to the drawings is a synthetic resin pipe with a joint and a connection structure thereof according to the present invention.

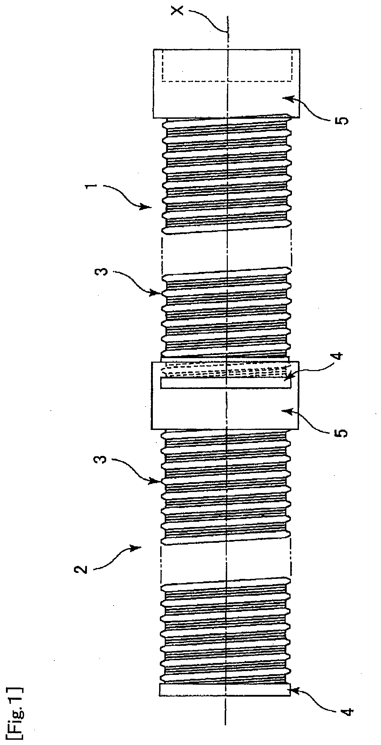

Fig. 1 is a general view showing a connection state between connected-side end portions of synthetic resin pipes 1 and 2 each provided with a joint (hereinafter, abbreviated as the synthetic resin pipes) according to the present invention.

In this figure, reference sign 3 denotes a pipe wall in a corrugated structure having a helically waved convex shape in cross section, reference sign 4 denotes an insert end portion, reference sign 5 denotes a cylindrical socket portion, and reference sign X denotes a pipe axis.

Each of the synthetic resin pipes 1 and 2 according to the present embodiment is identically configured by having the insert end portion 4 at one end and the socket portion 5 at the other end. However, the synthetic resin pipe according to the present invention is not necessarily limited to such a synthetic resin pipe having the insert end portion 4 and the socket portion 5 respectively at the ends.

The two synthetic resin pipes to be connected with each other have only to be provided with the insert end portion 4 (or the socket portion 5) and the socket portion 5 (or the insert end portion 4) at least respectively at the connected-side end portions. The ends not to be connected with each other may be formed differently from the socket portion or the insert end portion.

### 1. Synthetic resin pipe according to first embodiment of the present invention

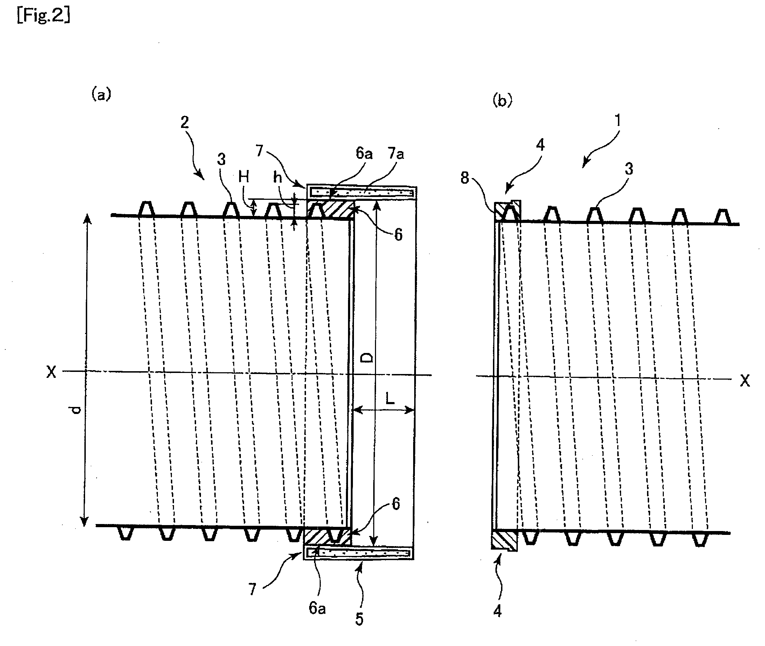

Figs. 2(a) and 2(b) are front views showing the synthetic resin pipes according to the first embodiment of the present invention. Fig. 2(a) is the front view showing the configuration of an enlarged socket portion 5, and Fig. 2(b) is the front view showing the configuration of an enlarged insert end portion 4.

### 1.1 Configuration of socket portion

In Fig. 2(a), the socket portion 5 has a helical-groove resin filling layer 6 where resin is filled in helical-groove at the connected-side end portion of the synthetic resin pipe 2. This helical-groove resin filling layer 6 smoothly forms an outer circumferential surface 6a to which the base end portion of a socket cover 7 is connected.

There is no particular limitation to the helical-groove filling resin, and examples thereof include foamable resin such as polyurethane foam, polystyrene foam, polyethylene foam, rigid vinyl chloride foamable resin, urea foamable resin, phenolic foamable resin, acrylic foamable resin, and cellulose acetate foamable resin. Such foamable resin contributes to prevention of increase in weight at the socket portion.

The socket cover 7 has a cylindrical shape and the distal end that projects by a length L from the connected end face of the synthetic resin pipe 2, so as to accommodate the insert end portion 4 shown in Fig. 2(b).

The helical-groove resin filling layer 6 has a radial height H that is slightly larger than a height h of a helical wave, so as to accommodate the insert end portion 4. Accordingly, the socket cover 7 has an inner diameter D that is slightly larger than an outer diameter d of the synthetic resin pipe 2.

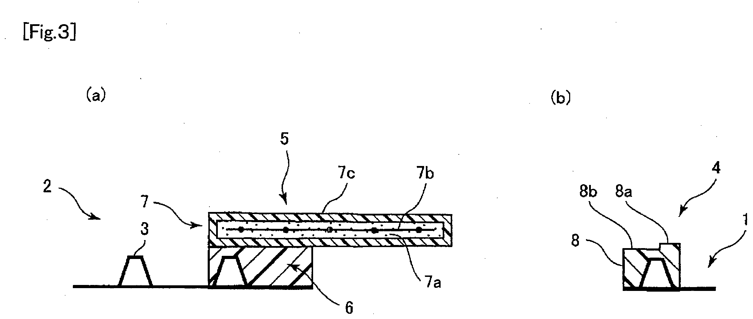

As shown in the enlarged view of Fig. 3(a), the socket cover 7 is a composite body including a light cement cylindrical body 7a serving as a core material, a reinforcing bar 7b located inside the light cement cylindrical body 7a, and a reinforcing layer 7c formed on the outer circumferential surface of the light cement cylindrical body 7a. It is noted that the reinforcing bar 7b is located as necessary, and is not an essential constituent element of the socket cover 7.

The reinforcing layer 7c is composed of an FRP layer obtained by impregnating a synthetic resin layer with reinforcing fibers.

As the reinforcing fibers, it is possible to use a chopped strand mat serving as an FRP glass fiber base, which is formed into a tape or sheet shape, with a coating weight in a preferable range from 100 to 300 g/m². Otherwise, it is possible to use an FRP plain woven glass cloth or a glass cloth tape, in which case, at a density of fibers in a preferable range of 16 to 25 warp yarns and 15 to 23 weft yarns per 25 mm. It is noted that the tape shape mentioned above is obtained by preliminarily cutting into a shape of a tape.

In the case where foamable resin is used as the resin for the reinforcing layer 7c, liquid synthetic resin is impregnated such that the resin wraps the reinforcing fibers while being foamed in a molding tool and is then cured so as to form an FRP layer.

By reinforcing the surface of the socket cover 7 with the FRP layer in this manner, the socket cover 7 can be protected from damage even when the socket cover 7 is dropped and impact is applied thereto during transportation of the synthetic resin pipe.

The reinforcing layer 7c for reinforcing the socket cover 7 at the socket portion 5 can be applied also to the surface of the insert end portion 4. If the surface of the connected-side end portion of the insert end portion 4 is reinforced with the reinforcing layer 7c, similarly to the socket portion 5, the insert end portion 4 can be also protected from damage. This will be described later with reference to Figs. 2(b) and 3(b).

The light cement cylindrical body 7a has a porous structure in which a large number of bubbles are dispersed. The porous structure can be formed by filling in a molding tool and curing a foamed and kneaded mixture obtained by preliminarily foaming cement, water, and a foaming agent, for example.

The cement is not particularly limited in terms of the type. Although it is generally possible to use any type of cement such as Portland cement, high-early-strength Portland cement, or ultrahigh-early-strength Portland cement, it is preferred to use high-early-strength Portland cement that is excellent in productivity and strength.

The blending ratio of cement and water is preferably in the range from 20 to 100 parts by mass and more preferably in the range from 20 to 50 parts by mass of water to 100 parts by mass of cement. Too much water tends to decrease the strength. To the contrary, insufficient water tends to decrease fluidity of the cement kneaded mixture during molding thereby deteriorating moldability.

The specific gravity of the light cement cylindrical body 7a is preferably in the range from 0.5 to 1.0, more preferably from 0.6 to 0.9, and most preferably from about 0.7 to 0.8 equally to that of a wood veneer board.

The light cement cylindrical body 7a is lighter as the specific gravity is smaller, which facilitates transportation and handling upon installation. It is noted that the light cement cylindrical body 7a may be produced with use of a water reducing agent where appropriate.

There is no particular limitation to the foaming agent mentioned above. It is possible to use any foaming agent for cement or concrete such as a foaming agent of any known type of a protein system, a surfactant system, a resin system, or the like.

In order to integrally form the reinforcing layer 7c on the surface of the light cement cylindrical body 7a, there is prepared a cylindrical molding tool (not shown) having an inner diameter slightly larger than the outer diameter of the light cement cylindrical body 7a, and the light cement cylindrical body 7a is set in the cylindrical molding tool so as to slightly float from the bottom surface of the molding tool.

Then a liquid FRP material is filled in a gap between the light cement cylindrical body 7a and the cylindrical molding tool. Accordingly, there is formed an FRP layer on the surface of the light cement cylindrical body 7a.

Subsequently, the reinforcing layer 7c is provided also on the inner surface of the light cement cylindrical body 7a in the manner same as the above.

Furthermore, the reinforcing layer 7c is provided also on the respective end faces of the light cement cylindrical body 7a in the cylindrical axis direction.

Formation of the reinforcing layer 7c on all the surfaces of the light cement cylindrical body 7a increases the strength of the socket cover 7. As a result, the socket cover 7 can be protected from external force applied to the socket portion 5.

There is no particular limitation to the resin as the FRP material, and examples thereof include polystyrene foam, polyethylene foam, rigid polyurethane foam, rigid vinyl chloride resin foam, urea resin foam, phenolic resin foam, acrylic resin foam, and cellulose acetate resin foam, and any other resin foam.

The expansion ratio of such foamable resin is not particularly limited, but is preferably from about three to six times in general, while the density thereof is preferably from 170 to 340 kg/m³. The strength of the socket cover 7 is increased as the expansion ratio is decreased, while the weight of the socket cover 7 is increased. On the other hand, the socket cover 7 is reduced in weight as the expansion ratio is increased, while the strength of the socket cover 7 is decreased. Therefore, the expansion ratio of the foamable resin used for reinforcing the socket cover 7 is determined in consideration of the lightweight, strength, impact resistance, and the like of the socket cover 7.

The resin is not limited to such foamable resin. Further alternatively, it is possible to use polystyrene resin, polyethylene resin, rigid polyurethane resin, flexible polyurethane resin, rigid vinyl chloride resin, urea resin, phenolic resin, acrylic resin, cellulose acetate resin, and any other non-foamable synthetic resin.

### 1.2 Configuration of insert end portion

In Fig. 2(b), the insert end portion 4 has a flange portion 8 provided at the connected-side end portion of the synthetic resin pipe 1. This flange portion 8 is provided to fill, with resin, the peaks and valleys of the helical corrugatrion at the connected-side end portion so as to form a smooth outer circumferential surface.

Examples of the resin used to form the flange portion 8 include foamable resin such as polyurethane foam, polystyrene foam, polyethylene foam, rigid vinyl chloride foamable resin, urea foamable resin, phenolic foamable resin, acrylic foamable resin, and cellulose acetate foamable resin. The expansion ratio of such foamable resin is preferably from about three to six times, while the density thereof is preferably from 170 to 340 kg/m³.

As shown in the enlarged view of Fig. 3(b), a stepped portion 8b which is stepped down from an outer surface 8a at the connected side of the flange portion 8 is provided.

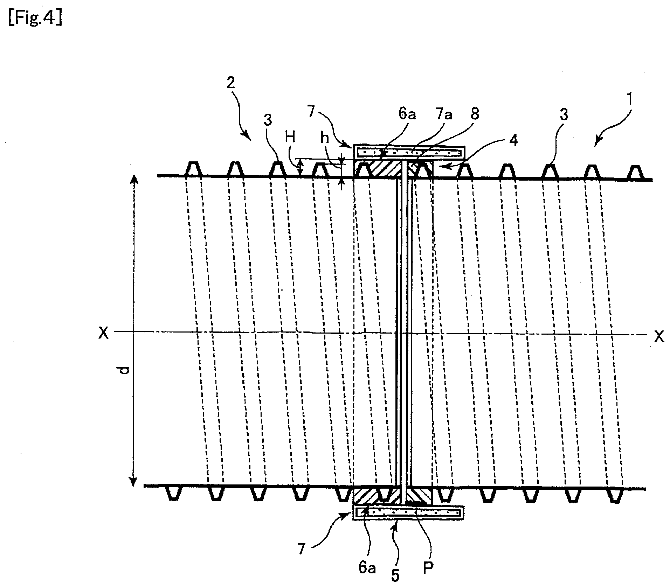

Fig. 4 is a front view showing a connection structure between the synthetic resin pipes 1 and 2.

When the insert end portion 4 is inserted into the socket portion 5, the stepped portion 8b thus provided generates an annular gap between a body outer wall of the insert end portion 4 and a body inner wall of the socket portion 5. An O-ring P serving as a sealing material is inserted into this annular gap.

Fig. 4 shows the state where the synthetic resin pipes 1 and 2 are slightly distant from each other for easier understanding on the location of the insert end portion 4 and the socket portion 5. However, the ends of the synthetic resin pipes 1 and 2 are in contact with each other in the actual connection structure.

In the present embodiment, the stepped portion 8b is provided in order to attach the sealing material at the connected side of the outer surface 8a. However, location of the stepped portion 8b is not limited to such a case. Alternatively, the stepped portion 8b can be provided at the edge opposite to the connected side of the outer surface 8a, or at the center of the outer surface 8a. Still alternatively, the stepped portion 8b can be provided on the inner surface of the socket cover 7 at the socket portion 5.

The sealing material is not particularly limited in terms of the shape and the structure as long as it can reliably seal the gap between the insert end portion 4 and the socket portion 5. The sealing material having any shape and any structure can be attached at an appropriate position.

Instead of additionally attaching the O-ring, the insert end portion 4 or the socket portion 5 can be preliminarily formed with an integral annular projection that serves as a sealing portion.

The outer surfaces of the synthetic resin pipes 1 and 2, including the insert end portion 4 and the socket portion 5, may be covered with a coating agent that can improve waterproof, weatherproof, and chemical resistance properties.

The above embodiment exemplifies the case where the length in the pipe axis direction of the insert end portion 4 is shorter than the length L of the socket portion 5. Alternatively, the length in the pipe axis direction of the insert end portion 4 can be equalized to the length L of the socket portion 5.

### 2. Synthetic resin pipe according to second embodiment of the present invention

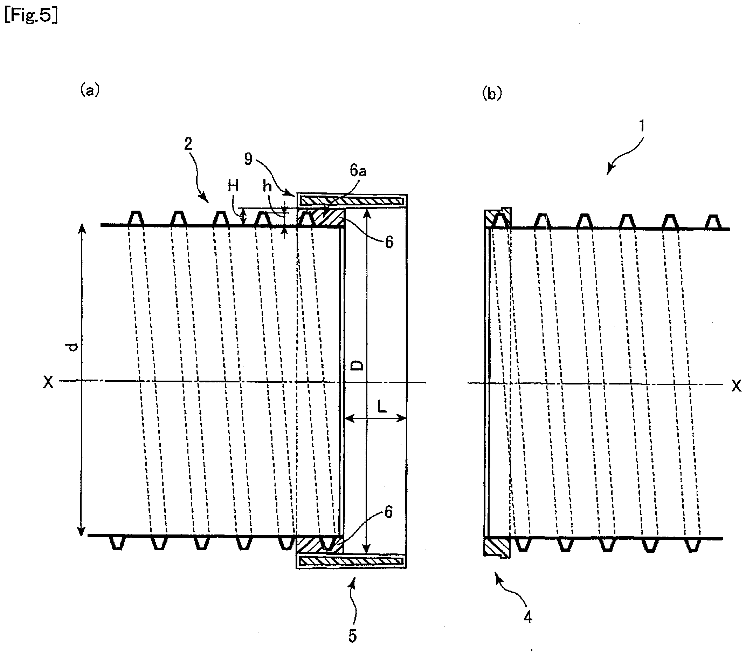

Figs. 5(a) and 5(b) are front views showing synthetic resin pipes according to the second embodiment of the present invention. Fig. 5(a) shows the configuration of a socket portion, and Fig. 5(b) shows the configuration of an insert end portion.

In the following, the constituent elements configured identically with those shown in Figs. 2(a) to 4 are denoted by the same reference signs and are not described repeatedly.

### 2.1 Configuration of socket portion

In Fig. 5(a), the socket portion 5 has the helical-groove resin filling layer 6 where resin is filled in the helical-groove at the connected-side end portion of the synthetic resin pipe 2. This helical-groove resin filling layer 6 smoothly forms the outer circumferential surface 6a to which the base end portion of a socket cover 9 is connected.

The base end portion of the socket cover 9 adheres to the outer circumferential surface 6a, while the distal end of the socket cover 9 projects by the length L from the connected end face of the synthetic resin pipe 2, so as to accommodate the insert end portion 4 shown in Fig. 5(b).

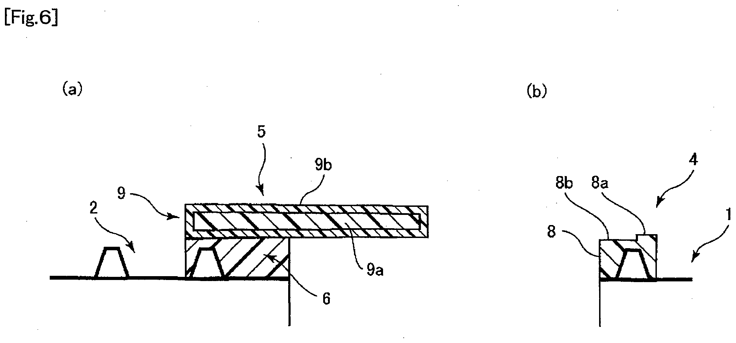

As shown in the enlarged view of Fig. 6(a), the socket cover 9 is comprised of a composite body including a foamed resin core 9a and a reinforcing layer 9b formed on the surface of the foamed resin core 9a.

The foamed resin core 9a is configured by a relatively light core material that is obtained by foaming foamable resin such as polyurethane foam at the expansion ratio of about 10 to 15 times and has the density from 70 to 100 kg/m³.

Furthermore, there may be formed an FRP layer serving as the reinforcing layer 9b, by impregnating, with reinforcing fibers, a foamed and molded synthetic resin layer that is obtained by foaming foamable resin such as polyurethane foam at the expansion ratio of about three to six times so as to have the density of 170 to 340 kg/m³.

### 2.2 Configuration of insert end portion

The insert end portion 4 shown in Fig. 6(b) is configured identically with the insert end portion 4 shown in Fig. 3(b), by having the flange portion 8 at the connected-side end portion of the synthetic resin pipe 1. The flange portion 8 has the stepped portion 8b.

### 3. Synthetic resin pipe according to third embodiment of the present invention

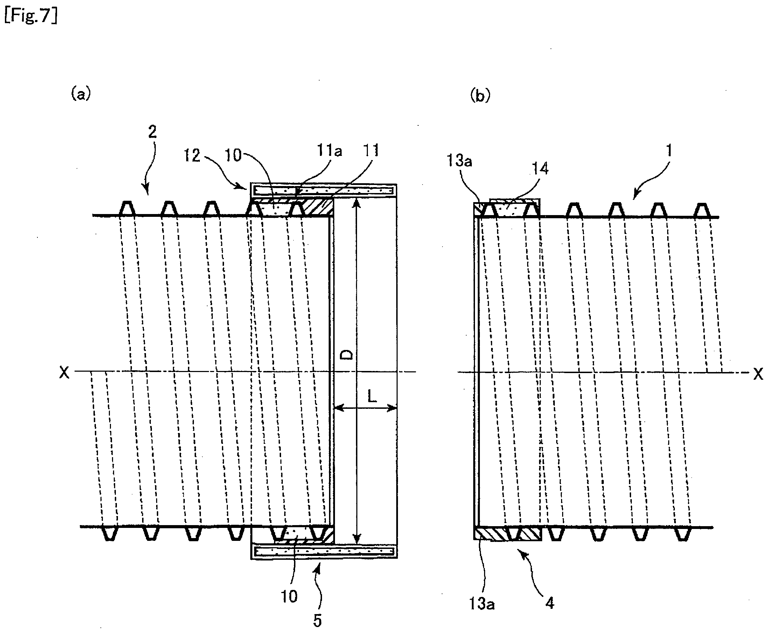

Figs. 7(a) and 7(b) are front views showing synthetic resin pipes according to the third embodiment of the present invention. Fig. 7(a) shows the configuration of a socket portion, and Fig. 7(b) shows the configuration of an insert end portion.

### 3.1 Configuration of socket portion

In Fig. 7(a), the socket portion 5 has a helical-groove cement filling layer 10 and a helical-groove resin filling layer 11 so as to fill the helical-groove at the connected-side end portion of the synthetic resin pipe 2.

Helical-groove cement filling layer 10 is filled with light cement and helical-groove resin filling layer 11 is filled with foamable resin.

This helical-groove resin filling layer 11 smoothly forms an outer circumferential surface 11a to which the base end portion of a socket cover 12 is connected.

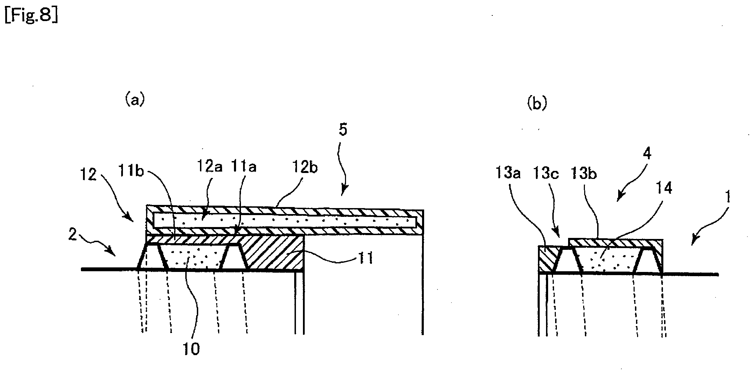

The helical-groove resin filling layer 11 has a portion 11b (see Fig. 8(a)) which covers also the outer circumferential surface of the helical-groove cement filling layer 10. Therefore, the outer circumferential surface 11a is configured only by the resin layer.

The distal end of the socket cover 12 projects by the length L from the connected-side end portion of the synthetic resin pipe 2, so as to accommodate the insert end portion 4 shown in Fig. 7(b).

As shown in the enlarged view of Fig. 8(a), the socket cover 12 is comprised of a composite body including a light cement cylindrical body 12a and a reinforcing layer 12b formed on the surface of the light cement cylindrical body 12a. The light cement cylindrical body 12a is configured identically with the light cement cylindrical body 7a shown in Fig. 3(a), and the reinforcing layer 12b is also configured identically with the reinforcing layer 7c shown in Fig. 3(a). There may be located a reinforcing bar as necessary in the light cement cylindrical body 12a.

The socket portion 5 configured as described above can support the base end portion of the socket cover 12 with the outer circumferential surface 11a having a larger area in comparison to the socket portion 5 shown in Fig. 3(a). It is therefore possible to enhance the rigidity of the socket portion 5. Moreover, it is possible to improve adhesive strength between the pipe body and the socket portion.

The helical-groove near the connected end face of the synthetic resin pipe 2 is filled with the helical-groove resin filling layer 11, so as to secure the strength at a level similar to the strength obtained in the configuration shown in Fig. 3(a).

Furthermore, the helical-groove at the end portion not provided with the helical-groove resin filling layer 11 are filled with the helical-groove filling cement layer 10 thereby to achieve reduction in weight. Therefore, both the increase in strength and the reduction in weight are realized at the socket portion 5.

### 3.2 Configuration of insert end portion

In the enlarged view of Fig. 8(b), the helical-groove near the connected end face at the insert end portion 4 is provided with a ring portion 13a. This ring portion 13a is in contact with the end face of the helical-groove resin filling layer 11 of the synthetic resin pipe 2.

This ring portion 13a is configured by foamable resin that is filled and molded so as to have a height substantially the same as that of the peaks of the helical corrugation. Examples of the foamable resin include polyurethane foam, polystyrene foam, polyethylene foam, rigid vinyl chloride resin foam, urea resin foam, phenolic resin foam, acrylic resin foam, and cellulose acetate resin foam.

At the connected-side end portion of the synthetic resin pipe 1, the helical-groove not provided with the ring portion 13a is filled with a helical-groove cement filling layer 14 similarly to the helical-groove cement filling layer 10, so as to achieve reduction in weight.

This helical-groove cement filling layer 14 is further covered with a coating resin layer 13b that is made of the foamable resin same as that configuring the ring portion 13a.

The ring portion 13a is formed so as to be stepped down from the coating resin layer 13b, thereby forming a stepped portion 13c that allows a sealing material to be attached thereto.

### 4. Socket cover according to modification example

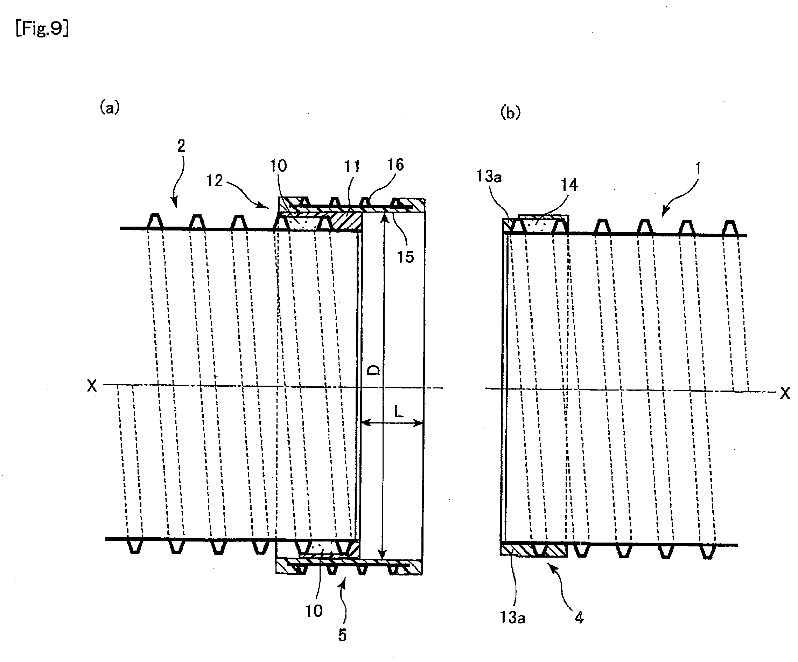

Figs. 9(a) and 9(b) are front views showing a socket cover according to the modification example. Fig. 9(a) shows the configuration of a socket portion, and Fig. 9(b) shows the configuration of an insert end portion.

In Figs. 9(a) and 9(b), the constituent elements configured identically with those shown in Figs. 7(a) and 7(b) are denoted by the same reference signs and are not described repeatedly.

4.1 Configuration of socket portion

In Fig. 9(a), the socket portion 5 has the helical-groove cement filling layer 10 and the helical-groove resin filling layer 11 which fill the helical-groove at the connected-side end portion of the synthetic resin pipe 2. This helical-groove resin filling layer 11 has the outer circumferential surface 11a to which the base end portion of the socket cover 12 is connected.

The socket cover 12 has a cylindrical shape and the distal end that projects by the length L from the connected end face of the synthetic resin pipe 2, so as to accommodate the insert end portion 4 shown in Fig. 9(b).

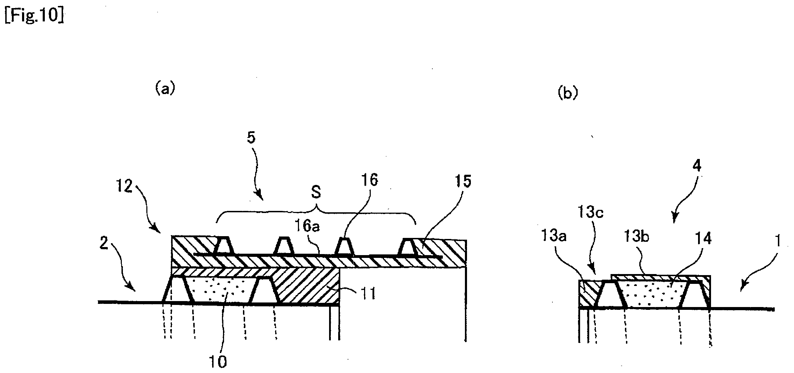

As shown in the enlarged view of Fig. 10(a), the socket cover 12 is configured by a synthetic resin cylindrical portion 15 that is made of foamable resin such as rigid polyurethane foam and a corrugated pipe piece 16 that is partially embedded in the synthetic resin cylindrical portion 15.

The corrugated pipe piece 16 has a diameter larger than the outer diameter of the synthetic resin pipe 2, and the respective ends in the pipe axis direction are embedded in the synthetic resin cylindrical portion 15. The region_S excluding the respective ends exposes a body outer wall 16a of the corrugated pipe piece 16.

More specifically, at the socket cover 12, the corrugated pipe piece 16 is embedded in the synthetic resin cylindrical portion 15 so as to partially expose the corrugated pipe piece 16.

At the ends of the socket cover 12 where the strength is particularly needed, it is important to integrally provide the corrugated pipe piece 16 with the synthetic resin cylindrical portion 15, so that the corrugated pipe piece 16 is embedded in the synthetic resin cylindrical portion 15. At the intermediate portion other than the ends, the corrugated pipe piece 16 is exposed so as to achieve reduction in weight and reduction in amount of the material for the synthetic resin cylindrical portion 15.

Furthermore, if the corrugated pipe piece 16 is provided with a helical corrugation, the corrugated pipe piece 16 has the appearance similar to that of the synthetic resin pipe 2 provided with the helical corrugation. As a result, the integrity in appearance between the corrugated pipe piece 16 and the synthetic resin pipe 2 is improved, thereby the quality in appearance also be improved.

### 4.2 Configuration of insert end portion

In the enlarged view of Fig. 10(b), the insert end portion 4 is configured identically with the insert end portion 4 shown in Fig. 8(b).

### 5. Manufacturing process of socket portion

Description is provided with reference again to Figs. 2(a) and 2(b).

### 5.1 Production of socket cover

Initially formed is the light cement cylindrical body 7a that has a cylindrical shape and serves as the core material.

The inner diameter of the light cement cylindrical body 7a is set to be slightly larger than the outer diameter of the synthetic resin pipe 2.

The light cement material is filled in a molding tool (not shown) for formation of a core material to mold the light cement cylindrical body 7a. The molding tool for formation of a core material includes an inner cylindrical frame, an outer cylindrical frame, and a bottom plate.

The light cement thus cured is removed from the molding tool.

A reinforcing fiber sheet is pasted to the body inner wall, the body outer wall, and the respective end faces in the cylindrical axis direction of the light cement cylindrical body 7a that was taken out of the molding tool.

The light cement cylindrical body 7a having the surface to which the reinforcing fiber sheet is pasted is then accommodated in a molding tool (not shown) for formation of a reinforcing layer.

There is secured a predetermined gap between the molding tool for formation of a reinforcing layer and the light cement cylindrical body 7a, and foamable resin is filled in the gap.

The foamable resin thus filled therein is impregnated with reinforcing fibers, so that an FRP layer is formed on the surfaces of the light cement cylindrical body 7a.

The socket cover 7 is formed by the above process.

### 5.2 Processing of connected-side end portion of synthetic resin pipe

Separately from the formation of the socket cover, the connected-side end portion of the synthetic resin pipe 2 is processed in order to connect with the socket cover 7.

A molding tool (not shown) for processing of the end, which has a halved cylindrical shape, is set to the connected-side end portion of the synthetic resin pipe 2 so as to surround the outer circumferential surface of the synthetic resin pipe 2.

The molding tool for processing of the end is provided with helically-formed peaks that can be engaged with the helically-formed grooves of the synthetic resin pipe 2.

The helically-formed peaks of the molding tool for processing of the end are fitted in the helically-channel of the synthetic resin pipe 2. Accordingly, the helically-grooves of the synthetic resin pipe 2 is sealed except at the connected-side end portion.

Subsequently, foamable resin is injected in the gap between the molding tool for processing of the end and the synthetic resin pipe 2.

After the foamable resin is cured, the molding tool is removed. As a result, the helical-groove resin filling layer 6 is formed at the connected-side end portion of the synthetic resin pipe 2.

### 5.3 Attaching socket cover

The base end portion of the socket cover 7 formed in the above method is positioned on the outer circumferential surface 6a of the helical-groove resin filling layer 6 at the end of the synthetic resin pipe 2 formed in the above method, and the socket cover 7 and the helical-groove resin filling layer 6 are molded integrally with each other.

In a case where these portions are integrally molded by adhesion, it is possible to use an adhesive agent such as an epoxy adhesive, an acrylic resin adhesive, a urethane resin adhesive, a silicone resin adhesive, a phenolic resin adhesive, a polyurethane resin adhesive, and a cyanoacrylate adhesive.

The socket cover 7 and the helical-groove resin filling layer 6 can be also molded integrally with use of a connection molding tool, for example. This connection molding tool is obtained by halving a cylinder in the pipe axis direction, and can be divided into right and left portions or upper and lower portions.

Described below is how to use this connection molding tool. After the socket cover 7 is located at a predetermined position in the connection molding tool, the synthetic resin pipe 2 is inserted from the base end portion side of the socket cover 7. The inserted synthetic resin pipe 2 is positioned such that the helical-corrugation of the synthetic resin pipe 2 are fitted in grooves provided in the inner surface of the molding tool so as to be matched with the shape of the helical corrugation.

After these portions are positioned, resin is injected through a resin injection hole provided in the molding tool, so that the helical-groove resin filling layer 6 is molded integrally with the socket cover 7 and the synthetic resin pipe 2.

The amount of the resin, the temperature of the resin, and the like in this case are adjusted in accordance with the diameter, the pitch of the peaks of the synthetic resin layer 2, and other design conditions.

As a result, the helical-groove resin filling layer 6 and the socket cover 7 are molded integrally with each other and the socket portion 5 is thus formed.

It is noted that the socket portion 5 shown in Fig. 6(a) can be formed by replacing the light cement serving as the core material with the synthetic resin core 9a.

### 5.4 Formation of insert end portion

The insert end portion of the synthetic resin pipe 1 is processed similarly to the connected-side end portion of the synthetic resin pipe 2. Another molding tool (not shown) for processing of the end, which has a halved cylindrical shape, is set to the connected-side end portion of the synthetic resin pipe 1 so as to surround the outer circumferential surface of the synthetic resin pipe 1. Helically formed peaks provided to the molding tool for processing of the end are fitted in the helically-grooves of the synthetic resin pipe 1.

In a state where the helical-grooves of the synthetic resin pipe 2 are sealed except at the connected-side end portion, foamable resin is injected and cured in a gap between the other molding tool for processing of the end and the synthetic resin pipe 1. Accordingly, the ring portion 8 is formed at the connected-side end portion of the synthetic resin pipe 1.

In the present embodiment, the inner wall of the socket cover 7 is extended in a tapered shape toward the connection direction. Alternatively, the inner wall of the socket cover 7 may be parallel to the cylindrical axis direction.

The present invention exemplifies the helical corrugated synthetic resin pipe in the above embodiment. However, the present invention is not limited to such a helical corrugated shape, but is applicable to a corrugated synthetic resin pipe of a so-called ring type, in which the wave shapes are independently and continuously provided in the pipe axis direction.

The corrugation may have any shape in cross section, such as a cornered wave, a rounded wave, or a wave having a concave groove at the top.

The embodiments of the present invention have been described as above. However, the present invention is not necessarily limited to these examples. The present invention can be apparently embodied in various modes within the scope not departing from the object of the invention.

### INDUSTRIAL APPLICABILITY

The synthetic resin pipe with a joint and the connection structure thereof according to the present invention are applicable to a drainage pipe buried in soil, a large drainage pipe for a sewer, or the like.

## Claims

1. A corrugated synthetic resin pipe (2) with a joint, the joint being located at a connected-side end portion of the corrugated synthetic resin pipe (2), for connecting the pipe (2) with another corrugated synthetic resin pipe (1), wherein the joint is provided with a socket portion (5) that is cylindrically extended from the connected-side end portion of the corrugated synthetic resin pipe (2), and the socket portion (5) is comprised of a composite body including a compact that is molded into a cylindrical shape and an FRP layer (7c, 9b, 12b) that is laminated at least on an outer circumferential surface of the compact,
**characterised in that**
the compact is a foamed compact, and **in that**
the connected-side end portion of the corrugated synthetic resin pipe (2) has a helical-groove filling layer (6, 10, 11) that fills and smooths a helical-groove of the corrugation, and the corrugated synthetic resin pipe (2) and the socket portion (5) are connected with each other by the helical-groove filling layer (6, 10, 11).

2. The corrugated synthetic resin pipe (2) with the joint according to claim 1, wherein the FRP layer (7c, 9b, 12b) is laminated on an inner circumferential surface of the foamed compact.

3. The corrugated synthetic resin pipe (2) with the joint according to claim 1 or 2, wherein the FRP layer (7c, 9b, 12b) is laminated on respective end faces in a pipe axis (X) direction of the foamed compact.

4. The corrugated synthetic resin pipe (2) with the joint according to any one of claims 1 to 3, wherein the helical-groove filling layer (6, 10, 11) is made of at least one of foamable resin and cellular cement.

5. The corrugated synthetic resin pipe (2) with the joint according to any one of claims 1 to 4, wherein the foamed compact is made of foamable resin or cellular cement.

6. The corrugated synthetic resin pipe (2) with the joint according to any one of claims 1 to 5, wherein the corrugated synthetic resin pipe (2) is made by combining a synthetic resin inner pipe in a cylindrical shape, a reinforcing core that has a convex shape in cross section and is helically wounded around an outer surface of the synthetic resin inner pipe at a constant distance, and a synthetic resin outer pipe that covers an outer surface of the reinforcing core.

7. A connection structure comprising the corrugated synthetic resin pipe (2) with the joint having the socket portion (5) of any one of claims 1 to 6, and a synthetic resin pipe (1) with a joint having an insert end portion (4) to be inserted into the socket portion (5), wherein
the synthetic resin pipe (1) provided with the insert end portion (4) is corrugated and has a connected-side end portion that is provided with an insert end portion helical-groove filling layer filling and smoothing a helical-groove of the corrugation.

8. The connection structure comprising the corrugated synthetic resin pipe (2) with the joint according to claim 7, wherein the insert end portion helical-groove filling layer is made of at least one of foamable resin and cellular cement.

9. The connection structure comprising the corrugated synthetic resin pipe (2) with the joint according to claim 7 or 8, wherein the insert end portion (4) is provided with an FRP layer at least on an outer circumferential surface thereof.

10. The connection structure comprising the corrugated synthetic resin pipe (2) with the joint according to any one of claims 7 to 9, wherein a sealing material is provided between the insert end portion (4) and the socket portion (5).

## Patentansprüche

1. Gewelltes Kunstharzrohr (2) mit einem Verbindungsstück, wobei das Verbindungsstück an einem verbindungsseitigen Endteil des gewellten Kunstharzrohres (2) platziert ist, zum Verbinden des Rohres (2) mit einem anderen gewellten Kunstharzrohr (1), wobei das Verbindungsstück mit einem Aufnahmeteil (5), welches zylindrisch von dem verbindungsseitigen Endteil des gewellten Kunstharzrohres (2) ausgeweitet ist, bereitgestellt ist und das Aufnahmeteil (5) aus einem Verbundkörper, einschließlich eines Presslings, welcher in eine zylindrische Form geformt ist, und einer FRP-(faserverstärkten Kunststoff)-Schicht (7c, 9b, 12b), welche mindestens auf einer Außenumfangsfläche des Presslings laminiert ist, besteht,
**dadurch gekennzeichnet, dass**
der Pressling ein geschäumter Pressling ist und dass
das verbindungsseitige Endteil des gewellten Kunstharzrohres (2) eine helikale Rillenfüllschicht (6, 10, 11), welche eine helikale Rille der Wellung füllt und glättet, aufweist und das gewellte Kunstharzrohr (2) und das Aufnahmeteil (5) miteinander durch die helikale Rillenfüllschicht (6, 10, 11) verbunden sind.

2. Gewelltes Kunstharzrohr (2) mit dem Verbindungsstück nach Anspruch 1, wobei die FRP-Schicht (7c, 9b, 12b) auf einer Innenumfangsfläche des geschäumten Presslings laminiert ist.

3. Gewelltes Kunstharzrohr (2) mit dem Verbindungsstück nach Anspruch 1 oder 2, wobei die FRP-Schicht (7c, 9b, 12b) auf jeweiligen Stirnseiten in einer Rohrachsen-(X)-Richtung des geschäumten Presslings laminiert ist.

4. Gewelltes Kunstharzrohr (2) mit dem Verbindungsstück nach einem der Ansprüche 1 bis 3, wobei die helikale Rillenfüllschicht (6, 10, 11) aus mindestens einem von schäumbarem Harz und zellulärem Zement hergestellt ist.

5. Gewelltes Kunstharzrohr (2) mit dem Verbindungsstück nach einem der Ansprüche 1 bis 4, wobei der geschäumte Pressling aus schäumbarem Harz oder zellulärem Zement hergestellt ist.

6. Gewelltes Kunstharzrohr (2) mit dem Verbindungsstück nach einem der Ansprüche 1 bis 5, wobei das gewellte Kunstharzrohr (2) durch Zusammenfügen eines Kunstharzinnenrohres in einer zylindrischen Form, eines Verstärkungskerns, welcher eine konvexe Form im Querschnitt aufweist und helikal um eine Außenfläche des Kunstharzinnenrohres bei einem konstanten Abstand gewunden ist, und eines Kunstharzaußenrohres, welches eine Außenfläche des Verstärkungskerns bedeckt, hergestellt ist.

7. Verbindungsstruktur, umfassend das gewellte Kunstharzrohr (2) mit dem Verbindungsstück, aufweisend das Aufnahmeteil (5), nach einem der Ansprüche 1 bis 6 und ein Kunstharzrohr (1) mit einem Verbindungsstück, aufweisend ein Einsatzendteil (4), um in das Aufnahmeteil (5) eingesetzt zu werden, wobei
das Kunstharzrohr (1), bereitgestellt mit dem Einsatzendteil (4), gewellt ist und ein verbindungsseitiges Endteil, welches mit einer Einsatzendteil-helikalen Rillenfüllschicht, die eine helikale Rille der Wellung füllt und glättet, bereitgestellt ist, aufweist.

8. Verbindungsstruktur, umfassend das gewellte Kunstharzrohr (2) mit dem Verbindungsstück, nach Anspruch 7, wobei die Einsatzendteil-helikale Rillenfüllschicht aus mindestens einem von schäumbarem Harz und zellulärem Zement hergestellt ist.

9. Verbindungsstruktur, umfassend das gewellte Kunstharzrohr (2) mit dem Verbindungsstück, nach Anspruch 7 oder 8, wobei das Einsatzendteil (4) mit einer FRP-Schicht mindestens auf einer Außenumfangsfläche davon bereitgestellt ist.

10. Verbindungsstruktur, umfassend das gewellte Kunstharzrohr (2) mit dem Verbindungsstück, nach einem der Ansprüche 7 bis 9, wobei ein Versiegelungsmaterial zwischen dem Einsatzendteil (4) und dem Aufnahmeteil (5) bereitgestellt ist.

## Revendications

1. Tube en résine synthétique à spires (2) comprenant une jonction, la jonction se situant sur une partie terminale côté connexion du tube en résine synthétique à spires (2), destinée à la connexion du tube (2) avec un autre tube en résine synthétique à spires (1), où la jonction est munie d'une partie de manchon (5), qui s'étend de manière cylindrique depuis la partie terminale côté connexion du tube en résine synthétique à spires (2), et la partie de manchon (5) est composée d'un corps composite comprenant un compact qui est moulé en une forme cylindrique et une couche FRP (7c, 9b, 12b) qui est stratifiée au moins sur la surface de circonférence extérieure du compact,
**caractérisé en ce que**
le compact est un compact moussé, et **en ce que**
la partie terminale côté connexion du tube en résine synthétique à spires (2) présente une couche de remplissage d'une rainure hélicoïdale (6, 10, 11), qui remplit et lisse la rainure hélicoïdale des spires, le tube en résine synthétique à spires (2) et la partie de manchon (5) sont connectés l'un à l'autre par la couche de remplissage d'une rainure hélicoïdale (6, 10, 11).

2. Tube en résine synthétique à spires (2) avec la jonction selon la revendication 1, où la couche FRP (7c, 9b, 12b) est stratifiée sur la surface de circonférence interne du compact moussé.

3. Tube en résine synthétique à spires (2) avec la jonction selon la revendication 1 ou 2, où la couche FRP (7c, 9b, 12b) est stratifiée sur les faces terminales respectives dans une direction de l'axe du tube (X) du compact moussé.

4. Tube en résine synthétique à spires (2) avec la jonction selon l'une quelconque des revendications 1 à 3, où la couche de remplissage d'une rainure hélicoïdale (6, 10, 11) est composée d'au moins l'un parmi une résine moussable et un ciment cellulaire.

5. Tube en résine synthétique à spires (2) avec la jonction selon l'une quelconque des revendications 1 à 4, où le compact moussé est composé de résine moussable ou de ciment cellulaire.

6. Tube en résine synthétique à spires (2) avec la jonction selon l'une quelconque des revendications 1 à 5, où le tube en résine synthétique à spires (2) est préparé par combinaison d'un tube interne en résine synthétique de forme cylindrique, d'un coeur de renfort qui présente une forme convexe en coupe transversale et qui est enroulé de manière hélicoïdale autour de la surface externe du tube interne en résine synthétique à une distance constante, et un tube externe en résine synthétique, qui couvre la surface extérieure du coeur de renfort.

7. Structure de connexion comprenant le tube en résine synthétique à spires (2) avec la jonction présentant la partie de manchon (5) selon l'une quelconque des revendications 1 à 6, et un tube en résine synthétique (1) présentant une jonction avec partie terminale d'insert (4) à insérer dans la partie de manchon (5), où le tube en résine synthétique (1) muni de la partie d'insert (4) est à spires et présente une partie terminale côté connexion qui est munie d'une couche de remplissage d'une rainure hélicoïdale de partie terminale d'insert, qui remplit et lisse la rainure hélicoïdale des spires.

8. Structure de connexion comprenant le tube en résine synthétique à spires (2) avec la jonction selon la revendication 7, où la couche de remplissage d'une rainure hélicoïdale de partie terminale d'insert est composée d'au moins l'un parmi une résine moussable et un ciment cellulaire.

9. Structure de connexion comprenant le tube en résine synthétique à spires (2) avec la jonction selon la revendication 7 ou 8, où la partie terminale d'insert (4) est munie d'une couche FRP, au moins sur sa surface de circonférence extérieure.

10. Structure de connexion comprenant le tube en résine synthétique à spires (2) avec la jonction selon l'une quelconque des revendications 7 à 9, où un matériau de scellement est disposé entre la partie terminale d'insert (4) et la partie de manchon (5).
